# EUROPÄISCHE PATENTSCHRIFT

(11) **EP 2 339 521 B1**
(45) Veröffentlichungstag und Bekanntmachung des Hinweises auf die Patenterteilung: **04.05.2016**
(21) Anmeldenummer: 10015379.0
(22) Anmeldetag: 07.12.2010
(51) Int. Cl.: G06Q 20/00

(54) **Bargeldlose Bezahlung eines Einkaufs eines Käufers bei einem Verkäufer von Produkten und/oder Dienstleistungen**
Cash-less payment for a purchase by a buyer from a seller of products and/or services
Paiement sans monnaie d'un achat d'un acheteur chez un vendeur de produits et/ou de prestations de service

(30) Priorität: 09.12.2009 DE 102009057385
(43) Veröffentlichungstag der Anmeldung: 29.06.2011
(73) Patentinhaber: Vodafone Holding GmbH, 40213 Düsseldorf (DE)
(72) Erfinder: Hengels, Erik, 13055 Berlin (DE); Fengler, Marc-André, 40477 Düsseldorf (DE); Strasding, Nikolai, 47809 Krefeld (DE); Bornemann, Jochen, 50997 Köln (DE)
(74) Vertreter: Ring & Weisbrodt

(56) Entgegenhaltungen:
- EP-A1- 1 729 253
- EP-A1- 2 124 177
- WO-A1-2006/100171
- WO-A1-2009/039419
- WO-A2-2006/138584
- US-A1- 2006 085 357
- US-A1- 2008 297 311

## Beschreibung

Die vorliegende Erfindung betrifft ein Verfahren zur bargeldlosen Bezahlung eines Einkaufs eines Käufers bei einem Verkäufer von Produkten und/oder Dienstleistungen, wobei der Käufer zur Bezahlung ein in einem Mobilfunknetz betreibbares mobiles Endgerät nutzt und den Bezahlvorgang über das Mobilfunknetz autorisiert.

Ferner betrifft die vorliegende Erfindung ein mobiles Endgerät eines Käufers zum Betrieb in einem Mobilfunknetz, welches ausgebildet und/oder eingerichtet ist ein erfindungsgemäßes Verfahren zumindest teilweise auszuführen.

Ferner betrifft die vorliegende Erfindung eine Einrichtung seitens eines Verkäufers von Produkten und/oder Dienstleistungen, welche zur zumindest teilweisen Umsetzung und/oder Ausführung eines erfindungsgemäßen Verfahrens ausgebildet und/oder eingerichtet ist.

Gegenstand der vorliegenden Erfindung ist darüber hinaus ein Mobilfunknetz mit wenigstens einer Einrichtung welche ausgebildet und/oder eingerichtet ist ein erfindungsgemäßes Verfahren zumindest teilweise auszuführen und/oder zu koordinieren, vorzugsweise mit einem erfindungsgemäßen mobilen Endgerät eines Käufers und/oder einer erfindungsgemäßen Einrichtung seitens eines Verkäufers von Produkten und/oder Dienstleistungen.

Im Stand der Technik sind verschiedene Systeme, Verfahren und Vorrichtungen für eine bargeldlose Bezahlung eines Einkaufs eines Käufers bei einem Verkäufer von Produkten und/oder Dienstleistungen, wobei der Käufer zur Bezahlung ein in einem Mobilfunknetz betreibbares mobiles Endgerät nutzt und der Bezahlvorgang über das Mobilfunknetz erfolgt, bekannt.

Bei den im Stand der Technik bekannten Lösungen wird dabei in der Regel versucht, die gegenseitige Authentisierung - das heißt insbesondere ein Nachweisen einer Identität - der an einem Bezahlvorgang beteiligten Parteien, das heißt insbesondere des Käufers gegenüber dem Verkäufer bzw. des Verkäufers gegenüber dem Käufer, zu ermöglichen. Derartige Lösungen finden insbesondere bei Bezahlvorgängen für sogenannte Online-Einkäufe Anwendung und sind beispielsweise aus der DE 199 38 201 A1 oder der GB 2 366 139 A bekannt.

Das Dokument US 2008/297311 A1 offenbart ein System zur Bereitstellung eines Dienstes, beispielsweise eine Kreditkarten- oder Lastschriftzahlung. Ein den Dienst bereitstellendes Endgerät, beispielsweise ein Mobilfunktelefon oder Smartphone weist ein optisches ID-Tag auf. Daten werden über die optische drahtlose Verbindung von dem ID-Tag zu einer entsprechend ausgebildeten Einrichtung übermittelt. Die empfangenen Daten werden an einen Server übermittelt, welcher eine Authentifizierung durchführt und eine Benachrichtigung über die Einrichtung an das den Dienst bereitstellende Endgerät sendet. Im Falle einer positiven Authentifizierung und somit einer entsprechenden Benachrichtigung kann der angeforderte Dienst seitens des Endgerätes bereitgestellt werden.

Eine insbesondere hinsichtlich der Sicherheit von Bezahlvorgängen für die beteiligten Parteien eines Bezahlvorgangs zufriedenstellende Lösung für ansonsten mit Bargeld, Kreditkarten oder dergleichen Zahlungsmitteln abzuwickelnde Bezahlvorgänge in den Geschäftsräumen eines Verkäufers von Produkten und/oder Dienstleistungen ist bisher nicht gegeben.

Der Erfindung liegt in Anbetracht dieses Standes der Technik die Aufgabe zugrunde, die bargeldlose Bezahlung eines Einkaufs eines Käufers bei einem Verkäufer von Produkten und/oder Dienstleistungen, wobei der Käufer zur Bezahlung ein in einem Mobilfunknetz betreibbares mobiles Endgerät nutzt und den Bezahlvorgang über das Mobilfunknetz autorisiert, zu verbessern, insbesondere sowohl hinsichtlich der Sicherheit als auch hinsichtlich der Vorrichtungs- und/oder Handhabungsaufwendungen.

Diese Aufgabe wird gelöst durch den Gegenstand des Anspruchs 1.

Vorteilhafterweise werden erfindungsgemäß die seitens eines Mobilfunknetzes gegebenen Netzzugangs- und/oder Authentisierungsmechanismen in Kombination mit einer nahfeldkommunikationsfähige Einrichtung mit wenigstens einer Nahfeldkommunikationskennzeichnung genutzt. Der Erfindung liegt die Erkenntnis zugrunde, dass sich durch den erfindungsgemäßen Einsatz von nahfeldkommunikationsfähigen Einrichtungen in Kombination mit dem Einsatz eines Mobilfunknetzes und darin betreibbaren mobilen Endgeräten die Sicherheit von Bezahlvorgängen für die an einem Bezahlvorgang beteiligten Käufer und Verkäufer insbesondere für ansonsten mit Bargeld, Kreditkarten oder dergleichen Zahlungsmitteln abzuwickelnde Bezahlvorgänge in den Geschäftsräumen eines Verkäufers von Produkten und/oder Dienstleistungen realisierbar ist.

Eine vorteilhafte Ausgestaltung der Erfindung ist dadurch gekennzeichnet, dass der wenigstens einen Nahfeldkommunikationskennzeichnung des mobilen Endgerätes des Käufers seitens des Mobilfunknetzes wenigstens eine persönliche Identifikationsnummer, sogenannte PIN, des Käufers zugeordnet ist oder wird, bei erfolgreicher Überprüfung der Identität und der Bonität des Käufers zunächst eine Überprüfung der wenigstens einen persönlichen Identifikationsnummer des Käufers erfolgt, bevor bei erfolgreicher Überprüfung der wenigstens einen persönlichen Identifikationsnummer des Käufers die Bezahlung über das Mobilfunknetz abgewickelt wird. Durch die erfindungsgemäß vorgesehene Überprüfung der persönlichen Identifikationsnummer des Käufers vor der Abwicklung der Bezahlung über das Mobilfunknetz ist die Sicherheit des Bezahlvorgangs vorteilhafterweise sowohl für den Käufer als auch für den Verkäufer weiter verbesserbar.

Eine weitere vorteilhafte Ausgestaltung der Erfindung ist dadurch gekennzeichnet, dass im Rahmen der Überprüfung der wenigstens einen persönlichen Identifikationsnummer des Käufers der Käufer die wenigstens eine persönliche Identifikationsnummer seitens seines mobilen Endgerätes oder seitens einer seitens des Verkäufers vorgesehenen Einrichtung zur Erfassung wenigstens einer persönlichen Identifikationsnummer wenigstens eines Käufers eingibt, die durch Eingabe erfasste wenigstens eine persönliche Identifikationsnummer des Käufers an das Mobilfunknetz übermittelt wird, vorzugsweise via fixed line (Festnetz(Kabel), via Internet/WLAN oder auf andere elektronische Weise, und seitens des Mobilfunknetzes die wenigstens eine übermittelte persönliche Identifikationsnummer des Käufers mit der wenigstens einen der wenigstens einen Nahfeldkommunikationskennzeichnung des mobilen Endgerätes des Käufers seitens des Mobilfunknetzes zugeordneten persönlichen Identifikationsnummer des Käufers verglichen wird.

Vorteilhafterweise erfolgen die Eingabe und die Übermittlung der wenigstens einen persönlichen Identifikationsnummer des Käufers unter Nutzung einer seitens des mobilen Endgerätes des Käufers ausgeführten Anwendung.

Vorteilhafterweise wird die Ausführung der Anwendung im Rahmen der Überprüfung der wenigstens einen persönlichen Identifikationsnummer des Käufers automatisch von dem Mobilfunknetz ausgelöst, vorzugsweise insbesondere von einem geeigneten, mobilfunknetzbetreiberseitigen Backendsystem einer geeigneten Backendlogik oder insbesondere dem jeweiligen Kassensystem des beteiligten Händlers/Verkäufers.

In einer weiteren Ausgestaltung der Erfindung wird die Ausführung der Anwendung von dem Käufer ausgelöst.

In einer weiteren vorteilhaften Ausgestaltung der Erfindung wird die über das Mobilfunknetz erfolgende Bezahlungsabwicklung seitens einer Einrichtung des Verkäufers und/oder seitens des mobilen Endgerätes des Käufers signalisiert, vorzugsweise unter Nutzung eines Kommunikationsdienstes des Mobilfunknetzes.

Eine bevorzugte Ausgestaltung der Erfindung ist gekennzeichnet durch einen Kurmitteilungsdienst (SMS: Short Message Service), einen Multimedia-Mitteilungsdienst (MMS: Multimedia Message Service), einen Instant Messaging Service, vorzugsweise erfolgend im Rahmen einer Applikation, und/oder einen Übermittlungsdienst auf Basis von USSD (USSD: Unstructured Supplementary Service Data) (USSD) als erfindungsgemäßen Kommunikationsdienst des Mobilfunknetzes.

In einer besonderes bevorzugten Ausgestaltung der Erfindung ist die nahfeldkommunikationsfähige Einrichtung mit wenigstens einer Nahfeldkommunikationskennzeichnung ein sogenannter NFC-Tag (NFC: Near Field Communication).

Eine weitere vorteilhafte Ausgestaltung der Erfindung sieht eine Berücksichtigung des Aufenthaltsortes des Käufers im Mobilfunknetz vor, insbesondere hinsichtlich weitergehender Sicherheitsmaßnahmen für den Bezahlvorgang. Die Berücksichtigung des Aufenthaltsortes des Käufers im Mobilfunknetz erfolgt vorteilhafterweise mittels sogenannter LBS-Dienste bzw. LBS-Einrichtungen (LBS: Location Based Services) und/oder mittels sogenannter GPS-Dienste bzw. GPS-Einrichtungen (GPS: Global Positioning System) und/oder durch sogenannte Velocity Checks, bei welchen eine Überwachung von Identitäten (IDs) von Käufern insbesondere hinsichtlich zeitlicher und/oder lokaler Nutzungsfrequenzen erfolgt. Dabei kann ein Bezahlvorgang bei einem Verkäufer vorteilhafterweise in Abhängigkeit von dem der Verkaufseinrichtung und/oder der Kasseneinrichtung des Verkäufers seitens des Mobilfunknetzes zugeordneten Aufenthaltsort erfolgen. Im Rahmen einer Überprüfung wird dabei der Aufenthaltsort des Käufers mit dem Aufenthaltsort der Verkaufseinrichtung und/oder der Kasseneinrichtung des Verkäufers verglichen. Bei dem Bezahlvorgang müssen beide vorteilhafterweise Aufenthaltsorte identisch sein.

Zur technischen Lösung der eingangs genannten Aufgabe wird mit der vorliegenden Erfindung ferner ein mobiles Endgerät zum Betrieb in einem Mobilfunknetz, vorzugsweise gemäß einem GSM-, GPRS- und/oder UMTS-Funknetzstandard, vorgeschlagen, welches gekennzeichnet ist durch wenigstens eine nahfeldkommunikationsfähige Einrichtung mit wenigstens einer Nahfeldkommunikationskennzeichnung und ausgebildet und/oder eingerichtet ist ein erfindungsgemäßes Verfahren auszuführen.

In einer bevorzugten Ausgestaltung der Erfindung ist die Nutzung eines NFC-Tags in Form eines aufklebbaren Mikrochips vorgesehen, welcher an einem erfindungsgemäßen mobilen Endgerät, vorzugsweise einem Mobilfunktelefon angebracht ist. Eine weitere bevorzugte Ausgestaltung der Erfindung sieht die Nutzung eines Schlüssels, einer KundenID, insbesondere einer erfindungsgemäße Nahfeldkommunikationskennzeichnung, oder dergleichen Kennung auf der SIM eines NFC-fähigen mobilen Endgerätes, vorzugsweise eines NFC-fähigen Mobilfunktelefons, vor.

Zur technischen Lösung der eingangs genannten Aufgabe wird mit der vorliegenden Erfindung ferner eine Einrichtung seitens eines Verkäufers von Produkten und/oder Dienstleistungen vorgeschlagen, welche zur Erfassung wenigstens einer Nahfeldkommunikationskennzeichnung, zur Übermittlung wenigstens einer Nahfeldkommunikationskennzeichnung an ein Mobilfunknetz, zur Erfassung wenigstens einer persönlichen Identifikationsnummer eines Käufers und/oder zur Signalisierung wenigstens einer über das Mobilfunknetz erfolgenden Bezahlungsabwicklung zur Umsetzung und/oder Ausführung eines erfindungsgemäßen Verfahrens ausgebildet und/oder eingerichtet ist.

In einer bevorzugten Ausgestaltung der Erfindung ist die eine Einrichtung eines Verkäufers von Produkten und/oder Dienstleistungen, ein mobiles Endgerät, vorzugsweise ein Mobilfunktelefon, insbesondere gemäß einem GSM-, GPRS- und/oder UMTS-Funknetzstandard, oder eine die Basistechnoiogien eines mobilen Endgerätes, vorzugsweise eines Mobilfunktelefons nutzende Einrichtung, insbesondere gemäß einem GSM-, GPRS- und/oder UMTS-Funknetzstandard, welches bzw. welche eine KundenID, insbesondere eine erfindungsgemäße Nahfeldkommunikationskennzeichnung, auslesen kann. In einer zweckmäßigen Ausgestaltung der Erfindung weist die SIM bzw. die SIM-Karte des mobilen Endgerätes ferner eine Applikation zur zumindest teilautomatischen Durchführung der Bezahltransaktion auf. Eine konkrete

Umsetzung der Erfindung ist gekennzeichnet durch die Nutzung von NFC-fähigen Mobilfunktelefonen und/oder NFC-fähigen mobilen Endgeräten mit äquivalenten Funktionalitäten. Zielgruppen hierfür sind insbesondere mobile Händler und/oder Dienstleister wie Markthändler, Taxifahrer und/oder dergleichen.

Gegenstand der vorliegenden Erfindung ist darüber hinaus ein Mobilfunknetz, vorzugsweise gemäß einem GSM-, GPRS- und/oder UMTS-Funknetzstandard, mit wenigstens einer Einrichtung welche ausgebildet und/oder eingerichtet ist ein erfindungsgemäßes Verfahren auszuführen und/oder zu koordinieren, mit einem erfindungsgemäßen mobilen Endgerät eines Käufers und/oder einer erfindungsgemäßen Einrichtung seitens eines Verkäufers von Produkten und/oder Dienstleistungen.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Prinzipdarstellung ein Ausführungsbeispiel einer erfindungsgemäßen bargeldlosen Bezahlung eines Einkaufs eines Käufers bei einem Verkäufer von Produkten und/oder Dienstleistungen;
- Fig. 2: in einer schematischen Prinzipdarstellung ein weiteres Ausführungsbeispiel einer erfindungsgemäßen bargeldlosen Bezahlung eines Einkaufs eines Käufers bei einem Verkäufer von Produkten und/oder Dienstleistungen;
- Fig. 3: in einer schematischen Prinzipdarstellung ein weiteres Ausführungsbeispiel einer erfindungsgemäßen bargeldlosen Bezahlung eines Einkaufs eines Käufers bei einem Verkäufer von Produkten und/oder Dienstleistungen;
- Fig. 4: in einer schematischen Prinzipdarstellung ein weiteres Ausführungsbeispiel einer erfindungsgemäßen bargeldlosen Bezahlung eines Einkaufs eines Käufers bei einem Verkäufer von Produkten und/oder Dienstleistungen; und
- Fig. 5: in einer schematischen Prinzipdarstellung ein weiteres Ausführungsbeispiel einer erfindungsgemäßen bargeldlosen Bezahlung eines Einkaufs eines Käufers bei einem Verkäufer von Produkten und/oder Dienstleistungen.

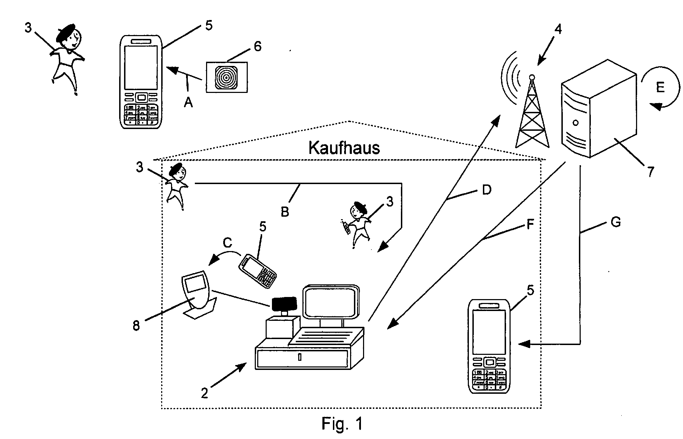

Bei den in den Figuren 1 bis 4 dargestellten Ausführungsbeispielen bietet ein Verkäufer in einem Kaufhaus 1 Produkte und/oder Dienstleistungen an, welche an einer Kasse 2 eines Kassensystems des Kaufhauses 1 von einem Käufer bzw. Kunden 3 zu bezahlen sind. Der Käufer 3 nutzt vorliegend ein in einem Mobilfunknetz 4 gemäß einem GSM-, GPRS- und/oder UMTS-Funknetzstandard, vorliegend symbolisch dargestellt durch eine Sende- und/oder Empfangseinrichtung des Mobilfunknetzes 4, betreibbares mobiles Endgerät 5, vorliegend ein Mobilfunktelefon 5. Das Mobilfunktelefon 5 des Käufers 3 ist erfindungsgemäß mit einer eine Nahfeldkommunikationskennzeichnung aufweisenden nahfeldkommunikationsfähigen Einrichtung 6 versehen, vorliegend mit einem sogenannten NFC-Tag (NFC: Near Field Communication) 6. Seitens des Mobilfunknetzes 4 ist der dem Käufer 3 bzw. dessen mobilen Endgerät 5 vom Mobilfunknetz 4 zugewiesenen Rufnummer (MSISDN) im Rahmen eines Registrierungsverfahrens des NFC-Tags 6 die Nahfeldkommunikationskennzeichnung zugeordnet. Die Zuordnung von Käufer 3 bzw. mobilem Endgerät 5 zu der Nahfeldkommunikationskennzeichnung des NFC-Tags 6 erfolgt vorliegend seitens einer Server- und Datenbankeinrichtung 7 des Mobilfunknetzes 4. Die Server- und Datenbankeinrichtung 7 ist dabei mit einem Abrechnungssystem verbunden oder in diesem integriert, mit welchem insbesondere von dem Käufer 3 mit dem Mobilfunktelefon 5 genutzte Kommunikationsdienstleistungen des Mobilfunknetzes 4 gegenüber dem Käufer 3 abgerechnet werden. Erfindungsgemäß verwaltet die Server- und Datenbankeinrichtung 7 des Mobilfunknetzes 4 vorliegend quasi ein Konto, welches für erfindungsgemäße Bezahlvorgänge nutzbar ist. Die Kasse 2 des Kassensystems weist vorliegend eine nahfeldkommunikationsfähige Einrichtung 8 zur Erfassung wenigstens einer Nahfeldkommunikationskennzeichnung eines NFC-Tags 6 auf.

Bei dem in Fig. 1 dargestellten Ausführungsbeispiel, welches vorzugsweise für Bezahlvorgänge von Produkten und/oder Dienstleistungen bis zu einem Betrag von 30,00 € Anwendung findet, hat der Käufer 3 in dem mit A gekennzeichneten Verfahrensschritt das NFC-Tag 6 an seinem Mobilfunktelefon 5 angebracht und sich bei der Server- und Datenbankeinrichtung 7 des Mobilfunknetzes 4 mit seiner Mobilfunknetzrufnummer (MSISDN) und der Nahfeldkommunikationskennzeichnung des NFC-Tags 6 für erfindungsgemäße Bezahlvorgänge registriert. Ein entsprechend für erfindungsgemäße Bezahlvorgänge nutzbares Konto wird dann vorliegend seitens der Server- und Datenbankeinrichtung 7 des Mobilfunknetzes 4 genutzt und verwaltet. Das Konto seitens der Server- und Datenbankeinrichtung 7 des Mobilfunknetzes 4 erfolgt dann vorzugsweise in Zusammenhang mit der Abrechnung von von dem Käufer 3 mit dem Mobilfunktelefon 5 genutzter Kommunikationsdienstleistungen des Mobilfunknetzes 4.

In dem mit B gekennzeichneten Verfahrensschritt wählt der Käufer 3 in dem Kaufhaus 1 des Verkäufers angebotene Produkte und/oder Dienstleistungen aus und geht zur Bezahlung derselben an eine Kasse 2 des Kaufhauses 1 des Verkäufers.

An der Kasse 2 des Kaufhauses 1 des Verkäufers hält der Käufer 3 in dem mit C gekennzeichneten Verfahrensschritt sein mit dem NFC-Tag 6 versehenes Mobilfunktelefon 5 zur Erfassung der Nahfeldkommunikationskennzeichnung des NFC-Tags 6 an die nahfeldkommunikationsfähige Einrichtung 8 der Kasse 2 oder in den Nahfeldbereich der nahfeldkommunikationsfähigen Einrichtung 8 der Kasse 2.

In dem mit D gekennzeichneten Verfahrensschritt übermittelt die Einrichtung 8 der Kasse 2 des Kassensystems des Verkäufers oder die Kasse 2 des Kassensystems des Verkäufers oder eine dazu eingerichtete und ausgebildete, hier nicht explizit dargestellte Einrichtung des Kassensystems des Verkäufers die erfasste Nahfeldkommunikationskennzeichnung des NFC-Tags 6 des Mobilfunktelefons 5 des Käufers 3 an die Server- und Datenbankeinrichtung 7, vorliegend vorteilhafterweise über das Mobilfunknetz 4 unter Nutzung eines Kommunikationsdienstes des Mobilfunknetzes 4.

Seitens der Server- und Datenbankeinrichtung 7 des Mobilfunknetzes 4 erfolgt dann in dem mit E gekennzeichneten Verfahrensschritt eine Überprüfung hinsichtlich der Identität des Käufers 3 und eine Überprüfung hinsichtlich der Bonität des Käufers, vorzugsweise mittels diverser Prüfungskriterien und/oder - medien, wie beispielsweise Sperrlisten und/oder dergleichen, anhand der übermittelten Nahfeldkommunikationskennzeichnung des NFC-Tags 6. Dabei wird in einer Datenbank der Server- und Datenbankeinrichtung 7 des Mobilfunknetzes 4 anhand der übermittelten Nahfeldkommunikationskennzeichnung des NFC-Tags 6 die Mobilfunknetzrufnummer (MSISDN) des Käufers 3 bestimmt und überprüft, ob der Käufer 3 in dem entsprechenden System hinterlegt ist und ob er über die erforderlichen finanziellen Mittel für den Bezahlvorgang verfügt. Dabei kann das seitens oder mittels der Server- und Datenbankeinrichtung 7 des Mobilfunknetzes 4 verwaltete Konto für erfindungsgemäße Bezahlvorgänge ein sogenanntes Guthabenkonto sein, welches von dem Käufer 3 zuvor mit einem bestimmten Betrag aufgefüllt wurde und von welchem dann für erfindungsgemäße Bezahlvorgänge Beträge abgezogen bzw. abgebucht werden, oder aber ein Konto, welches dann bei erfindungsgemäßen Bezahlvorgängen mit Beträgen entsprechend dem Bezahlvorgang belastet wird.

Sofern die in dem mit E gekennzeichneten Verfahrensschritt erfolgende Überprüfung hinsichtlich der Identität des Käufers 3 und hinsichtlich der Bonität des Käufers 3 erfolgreich ist, erfolgt der Bezahlvorgang bzw. wird der Bezahlvorgang von der Server- und Datenbankeinrichtung 7 des Mobilfunknetzes 4 initiiert.

Im Anschluss daran erhalten vorliegend das Kassensystem im Kaufhaus 1 des Verkäufers in dem mit F gekennzeichneten Verfahrensschritt als auch der Käufer 3 auf sein Mobilfunktelefon 5 in dem mit G gekennzeichneten Verfahrensschritt von der Server- und Datenbankeinrichtung 7 des Mobilfunknetzes 4 eine Information über die erfolgte Bezahlung, vorliegend vorteilhafterweise über das Mobilfunknetz 4 unter Nutzung eines Kommunikationsdienstes des Mobilfunknetzes 4, besonders bevorzugt mittels SMS, MMS, Instant Messaging oder USSD.

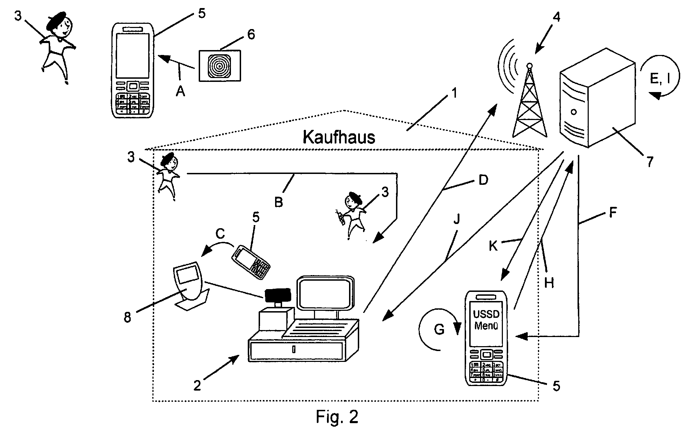

Bei dem in Fig. 2 dargestellten Ausführungsbeispiel, welches vorzugsweise für Bezahlvorgänge von Produkten und/oder Dienstleistungen ab einem Betrag von 30,00 € Anwendung findet, hat der Käufer 3 in dem mit A gekennzeichneten Verfahrensschritt den NFC-Tag 6 an seinem Mobilfunktelefon 5 angebracht und sich bei der Server- und Datenbankeinrichtung 7 des Mobilfunknetzes 4 mit seiner Mobilfunknetzrufnummer (MSISDN) und der Nahfeldkommunikationskennzeichnung des NFC-Tags 6 für erfindungsgemäße Bezahlvorgänge registriert. Ein entsprechend für erfindungsgemäße Bezahlvorgänge nutzbares Konto wird dann vorliegend seitens der Server- und Datenbankeinrichtung 7 des Mobilfunknetzes 4 genutzt und verwaltet. Das Konto seitens der Server- und Datenbankeinrichtung 7 des Mobilfunknetzes 4 erfolgt dann vorzugsweise in Zusammenhang mit der Abrechnung von von dem Käufer 3 mit dem Mobilfunktelefon 5 genutzter Kommunikationsdienstleistungen des Mobilfunknetzes 4.

In dem mit B gekennzeichneten Verfahrensschritt wählt der Käufer 3 in dem Kaufhaus 1 des Verkäufers angebotene Produkte und/oder Dienstleistungen aus und geht zur Bezahlung derselben an eine Kasse 2 des Kaufhauses 1 des Verkäufers.

An der Kasse 2 des Kaufhauses 1 des Verkäufers hält der Käufer 3 in dem mit C gekennzeichneten Verfahrensschritt sein mit dem NFC-Tag 6 versehenes Mobilfunktelefon 5 zur Erfassung der Nahfeldkommunikationskennzeichnung des NFC-Tags 6 an die nahfeldkommunikationsfähige Einrichtung 8 der Kasse 2 oder in den Nahfeldbereich der nahfeldkommunikationsfähigen Einrichtung 8 der Kasse 2.

In dem mit D gekennzeichneten Verfahrensschritt übermittelt die Einrichtung 8 der Kasse 2 des Kassensystems des Verkäufers oder die Kasse 2 des Kassensystems des Verkäufers oder eine dazu eingerichtete und ausgebildete, hier nicht explizit dargestellte Einrichtung des Kassensystems des Verkäufers die erfasste Nahfeldkommunikationskennzeichnung des NFC-Tags 6 des Mobilfunktelefons 5 des Käufers 3 an die Server- und Datenbankeinrichtung 7 des Mobilfunknetzes 4, vorliegend vorteilhafterweise über das Mobilfunknetz 4 unter Nutzung eines Kommunikationsdienstes des Mobilfunknetzes 4.

Seitens der Server- und Datenbankeinrichtung 7 des Mobilfunknetzes 4 erfolgt dann in dem mit E gekennzeichneten Verfahrensschritt eine Überprüfung hinsichtlich der Identität des Käufers 3 und unter anderem eine Überprüfung hinsichtlich der Bonität des Käufers anhand der übermittelten Nahfeldkommunikationskennzeichnung des NFC-Tags 6. Dabei wird in einer Datenbank der Server- und Datenbankeinrichtung 7 des Mobilfunknetzes 4 anhand der übermittelten Nahfeldkommunikationskennzeichnung des NFC-Tags 6 die Mobilfunknetzrufnummer (MSISDN) des Käufers 3 bestimmt und überprüft, ob der Käufer 3 über die erforderlichen finanziellen Mittel für den Bezahlvorgang verfügt. Dabei kann das seitens oder mittels der Server- und Datenbankeinrichtung 7 des Mobilfunknetzes 4 verwaltete Konto für erfindungsgemäße Bezahlvorgänge ein sogenanntes Guthabenkonto sein, welches von dem Käufer 3 zuvor mit einem bestimmten Betrag aufgefüllt wurde und von welchem dann für erfindungsgemäße Bezahlvorgänge Beträge abgezogen bzw. abgebucht werden, oder aber ein Konto, welches dann bei erfindungsgemäßen Bezahlvorgängen mit Beträgen entsprechend dem Bezahlvorgang belastet werden.

Sofern die in dem mit E gekennzeichneten Verfahrensschritt erfolgende Überprüfung hinsichtlich der Identität des Käufers 3 und hinsichtlich der Bonität des Käufers 3 erfolgreich ist, triggert die Server- und Datenbankeinrichtung 7 des Mobilfunknetzes 4 in dem mit F gekennzeichneten Verfahrensschritt über das Mobilfunknetz 4 vorliegend ein USSD-Menü seitens des Mobilfunktelefons 5 des Käufers 3 (USSD: Unstructured Supplementary Service Data). In einer weiteren Ausgestaltung der Erfindung kann der Käufer 3 das entsprechende USSD-Menü seitens des Mobilfunktelefons 5 auch selbst aktiv aufrufen bzw. auslösen.

Im Rahmen der Ausführung des USSD-Menüs seitens des Mobilfunktelefons 5 des Käufers 3 wird der Käufer 3 aufgefordert, eine persönliche Identifikationsnummer (PIN) einzugeben. Die eine persönliche Identifikationsnummer (PIN) ist dabei vorliegend seitens der Server- und Datenbankeinrichtung 7 des Mobilfunknetzes 4 dem der Nahfeldkommunikationskennzeichnung des NFC-Tags 6 des Käufers 3 und/oder der Mobilfunknetzrufnummer (MSISDN) des Mobilfunktelefons 5 des Käufers 3 zugeordnet. Die in Fig. 2 mit dem mit G gekennzeichneten Verfahrensschritt eingegebene persönliche Identifikationsnummer (PIN) wird dann von dem Mobilfunktelefon 5 automatisch an die Server- und Datenbankeinrichtung 7 des Mobilfunknetzes 4 übermittelt, vorliegend über das Mobilfunknetz 4. Die Übermittlung der persönliche Identifikationsnummer (PIN) von dem Mobilfunktelefon 5 des Käufers 3 an die Server- und Datenbankeinrichtung 7 des Mobilfunknetzes 4 ist in Fig. 2 durch den mit H gekennzeichneten Verfahrensschritt dargestellt.

Seitens der Server- und Datenbankeinrichtung 7 des Mobilfunknetzes 4 erfolgt dann in dem mit I gekennzeichneten Verfahrensschritt eine Überprüfung hinsichtlich der in Verfahrensschritt H übermittelten persönlichen Identifikationsnummer (PIN), welche dabei mit der seitens der Server- und Datenbankeinrichtung 7 des Mobilfunknetzes 4 hinterlegten persönlichen Identifikationsnummer (PIN) verglichen wird.

Sofern die in dem mit I gekennzeichneten Verfahrensschritt erfolgende Überprüfung der persönlichen Identifikationsnummer (PIN) erfolgreich war, das heißt die übermittelten persönlichen Identifikationsnummer (PIN) war bzw. ist identisch der zuvor hinterlegten persönlichen Identifikationsnummer (PIN), erfolgt der Bezahlvorgang bzw. wird der Bezahlvorgang von der Server- und Datenbankeinrichtung 7 des Mobilfunknetzes 4 initiiert.

Im Anschluss daran erhalten vorliegend das Kassensystem im Kaufhaus 1 des Verkäufers in dem mit J gekennzeichneten Verfahrensschritt als auch der Käufer 3 auf sein Mobilfunktelefon 5 in dem mit K gekennzeichneten Verfahrensschritt von der Server- und Datenbankeinrichtung 7 des Mobilfunknetzes 4 eine Information über die erfolgte Bezahlung, vorliegend vorteilhafterweise über das Mobilfunknetz 4 unter Nutzung eines Kommunikationsdienstes des Mobilfunknetzes 4, besonders bevorzugt mittels SMS.

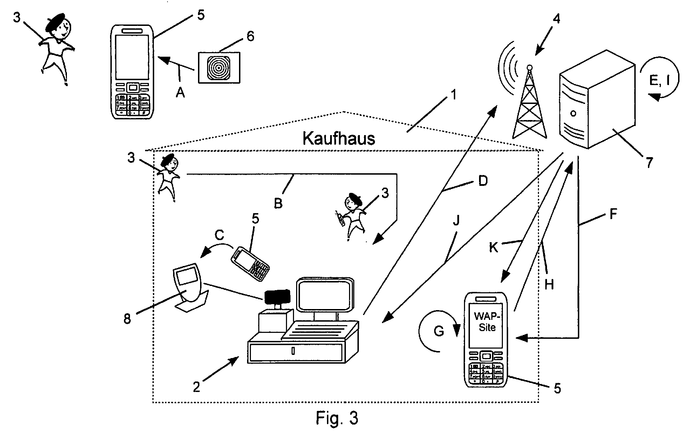

Bei dem in Fig. 3 dargestellten Ausführungsbeispiel, welches vorzugsweise für Bezahlvorgänge von Produkten und/oder Dienstleistungen ab einem Betrag von 30,00 € Anwendung findet, hat der Käufer 3 in dem mit A gekennzeichneten Verfahrensschritt den NFC-Tag 6 an seinem Mobilfunktelefon 5 angebracht und sich bei der Server- und Datenbankeinrichtung 7 des Mobilfunknetzes 4 mit seiner Mobilfunknetzrufnummer (MSISDN) und der Nahfeldkommunikationskennzeichnung des NFC-Tags 6 für erfindungsgemäße Bezahlvorgänge registriert. Ein entsprechend für erfindungsgemäße Bezahlvorgänge nutzbares Konto wird dann vorliegend seitens der Server- und Datenbankeinrichtung 7 des Mobilfunknetzes 4 genutzt und verwaltet. Die Abrechnung seitens der Server- und Datenbankeinrichtung 7 des Mobilfunknetzes 4 erfolgt dann entweder in Zusammenhang mit der Abrechnung von dem Käufer 3 mit dem Mobilfunktelefon 5 genutzter Kommunikationsdienstleistungen des Mobilfunknetzes 4 oder beispielsweise mittels einer Prepaid-Plattform, Lastschrift oder anderen von dem Mobilfunknetzbetreiber angebotenen Abrechnungs- und/oder Bezahlmethoden.

In dem mit B gekennzeichneten Verfahrensschritt wählt der Käufer 3 in dem Kaufhaus 1 des Verkäufers angebotene Produkte und/oder Dienstleistungen aus und geht zur Bezahlung derselben an eine Kasse 2 des Kaufhauses 1 des Verkäufers.

An der Kasse 2 des Kaufhauses 1 des Verkäufers hält der Käufer 3 in dem mit C gekennzeichneten Verfahrensschritt sein mit dem NFC-Tag 6 versehenes Mobilfunktelefon 5 zur Erfassung der Nahfeldkommunikationskennzeichnung des NFC-Tags 6 an die nahfeldkommunikationsfähige Einrichtung 8 der Kasse 2 oder in den Nahfeldbereich der nahfeldkommunikationsfähigen Einrichtung 8 der Kasse 2.

In dem mit D gekennzeichneten Verfahrensschritt übermittelt die Einrichtung 8 der Kasse 2 des Kassensystems des Verkäufers oder die Kasse 2 des Kassensystems des Verkäufers oder eine dazu eingerichtete und ausgebildete, hier nicht explizit dargestellte Einrichtung des Kassensystems des Verkäufers die erfasste Nahfeldkommunikationskennzeichnung des NFC-Tags 6 des Mobilfunktelefons 5 des Käufers 3 an die Server- und Datenbankeinrichtung 7 des Mobilfunknetzes 4, vorliegend vorteilhafterweise über das Mobilfunknetz 4 unter Nutzung eines Kommunikationsdienstes des Mobilfunknetzes 4.

Seitens der Server- und Datenbankeinrichtung 7 des Mobilfunknetzes 4 erfolgt dann in dem mit E gekennzeichneten Verfahrensschritt eine Überprüfung hinsichtlich der Identität des Käufers 3 und eine Überprüfung hinsichtlich der Bonität des Käufers anhand der übermittelten Nahfeldkommunikationskennzeichnung des NFC-Tags 6. Dabei wird in einer Datenbank der Server- und Datenbankeinrichtung 7 des Mobilfunknetzes 4 anhand der übermittelten Nahfeldkommunikationskennzeichnung des NFC-Tags 6 die Mobilfunknetzrufnummer (MSISDN) des Käufers 3 bestimmt und überprüft, ob der Käufer 3 in dem entsprechenden System hinterlegt ist und ob er über die erforderlichen finanziellen Mittel für den Bezahlvorgang verfügt. Dabei kann das seitens oder mittels der Server- und Datenbankeinrichtung 7 des Mobilfunknetzes 4 verwaltete Konto für erfindungsgemäße Bezahlvorgänge ein sogenanntes Guthabenkonto sein, welches von dem Käufer 3 zuvor mit einem bestimmten Betrag aufgefüllt wurde und von welchem dann für erfindungsgemäße Bezahlvorgänge Beträge abgezogen bzw. abgebucht werden, oder aber ein Konto, welches dann bei erfindungsgemäßen Bezahlvorgängen mit Beträgen entsprechend dem Bezahlvorgang belastet werden.

Sofern die in dem mit E gekennzeichneten Verfahrensschritt erfolgende Überprüfung hinsichtlich der Identität des Käufers 3 und hinsichtlich der Bonität des Käufers 3 erfolgreich ist, triggert die Server- und Datenbankeinrichtung 7 des Mobilfunknetzes 4 in dem mit F gekennzeichneten Verfahrensschritt über das Mobilfunknetz 4 vorliegend eine Anwendung seitens des Mobilfunktelefons 5 des Käufers 3 (USSD: Unstructured Supplementary Service Data). In einer weiteren Ausgestaltung der Erfindung erhält das Mobilfunktelefon 5 des Käufers 3 einen WAP-Push-Link, welcher bei Betätigung eine WAP-Site mit einer WAP-Anwendung öffnet bzw. startet. In einer weiteren Ausführung der Erfindung kann der Käufer 3 eine entsprechende WAP-Anwendung bzw. WAP-Site seitens des Mobilfunktelefons 5 auch selbst aktiv aufrufen bzw. auslösen.

Im Rahmen der Ausführung der Anwendung bzw. der WAP-Site seitens des Mobilfunktelefons 5 des Käufers 3 wird der Käufer 3 aufgefordert, eine persönliche Identifikationsnummer (PIN) einzugeben. Die eine persönliche Identifikationsnummer (PIN) ist dabei vorliegend seitens der Server- und Datenbankeinrichtung 7 des Mobilfunknetzes 4 dem der Nahfeldkommunikationskennzeichnung des NFC-Tags 6 des Käufers 3 und/oder der Mobilfunknetzrufnummer (MSISDN) des Mobilfunktelefons 5 des Käufers 3 zugeordnet. Die in Fig. 3 mit dem mit G gekennzeichneten Verfahrensschritt eingegebene persönliche Identifikationsnummer (PIN) wird dann von dem Mobilfunktelefon 5 automatisch an die Server- und Datenbankeinrichtung 7 des Mobilfunknetzes 4 übermittelt, vorliegend über das Mobilfunknetz 4. Die Übermittlung der persönliche Identifikationsnummer (PIN) von dem Mobilfunktelefon 5 des Käufers 3 an die Server- und Datenbankeinrichtung 7 des Mobilfunknetzes 4 ist in Fig. 3 durch den mit H gekennzeichneten Verfahrensschritt dargestellt.

Seitens der Server- und Datenbankeinrichtung 7 des Mobilfunknetzes 4 erfolgt dann in dem mit I gekennzeichneten Verfahrensschritt eine Überprüfung hinsichtlich der in Verfahrensschritt H übermittelten persönlichen Identifikationsnummer (PIN), welche dabei mit der seitens der Server- und Datenbankeinrichtung 7 des Mobilfunknetzes 4 hinterlegten persönlichen Identifikationsnummer (PIN) verglichen wird.

Sofern die in dem mit I gekennzeichneten Verfahrensschritt erfolgende Überprüfung der persönlichen Identifikationsnummer (PIN) erfolgreich war, das heißt die übermittelten persönlichen Identifikationsnummer (PIN) war bzw. ist identisch der zuvor hinterlegten persönlichen Identifikationsnummer (PIN), erfolgt der Bezahlvorgang bzw. wird der Bezahlvorgang von der Server- und Datenbankeinrichtung 7 des Mobilfunknetzes 4 initiiert.

Im Anschluss daran erhalten vorliegend das Kassensystem im Kaufhaus 1 des Verkäufers in dem mit J gekennzeichneten Verfahrensschritt als auch der Käufer 3 auf sein Mobilfunktelefon 5 in dem mit K gekennzeichneten Verfahrensschritt von der Server- und Datenbankeinrichtung 7 des Mobilfunknetzes 4 eine Information über die erfolgte Bezahlung, vorliegend vorteilhafterweise über das Mobilfunknetz 4 unter Nutzung eines Kommunikationsdienstes des Mobilfunknetzes 4, besonders bevorzugt mittels SMS.

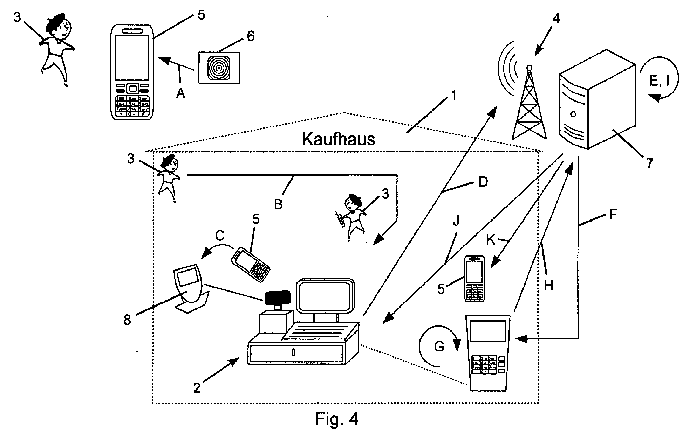

Bei dem in Fig. 4 dargestellten Ausführungsbeispiel, welches vorzugsweise für Bezahlvorgänge von Produkten und/oder Dienstleistungen ab einem Betrag von 30,00 € Anwendung findet, hat der Käufer 3 in dem mit A gekennzeichneten Verfahrensschritt den NFC-Tag 6 an seinem Mobilfunktelefon 5 angebracht und sich bei der Server- und Datenbankeinrichtung 7 des Mobilfunknetzes 4 mit seiner Mobilfunknetzrufnummer (MSISDN) und der Nahfeldkommunikationskennzeichnung des NFC-Tags 6 für erfindungsgemäße Bezahlvorgänge registriert. Ein entsprechend für erfindungsgemäße Bezahlvorgänge nutzbares Konto wird dann vorliegend seitens der Server- und Datenbankeinrichtung 7 des Mobilfunknetzes 4 genutzt und verwaltet. Das Konto seitens der Server- und Datenbankeinrichtung 7 des Mobilfunknetzes 4 erfolgt dann vorzugsweise in Zusammenhang mit der Abrechnung von von dem Käufer 3 mit dem Mobilfunktelefon 5 genutzter Kommunikationsdienstleistungen des Mobilfunknetzes 4.

In dem mit B gekennzeichneten Verfahrensschritt wählt der Käufer 3 in dem Kaufhaus 1 des Verkäufers angebotene Produkte und/oder Dienstleistungen aus und geht zur Bezahlung derselben an eine Kasse 2 des Kaufhauses 1 des Verkäufers.

An der Kasse 2 des Kaufhauses 1 des Verkäufers hält der Käufer 3 in dem mit C gekennzeichneten Verfahrensschritt sein mit dem NFC-Tag 6 versehenes Mobilfunktelefon 5 zur Erfassung der Nahfeldkommunikationskennzeichnung des NFC-Tags 6 an die nahfeldkommunikationsfähige Einrichtung 8 der Kasse 2 oder in den Nahfeldbereich der nahfeldkommunikationsfähigen Einrichtung 8 der Kasse 2.

In dem mit D gekennzeichneten Verfahrensschritt übermittelt die Einrichtung 8 der Kasse 2 des Kassensystems des Verkäufers oder die Kasse 2 des Kassensystems des Verkäufers oder eine dazu eingerichtete und ausgebildete, hier nicht explizit dargestellte Einrichtung des Kassensystems des Verkäufers die erfasste Nahfeldkommunikationskennzeichnung des NFC-Tags 6 des Mobilfunktelefons 5 des Käufers 3 an die Server- und Datenbankeinrichtung 7 des Mobilfunknetzes 4, vorliegend vorteilhafterweise über das Mobilfunknetz 4 unter Nutzung eines Kommunikationsdienstes des Mobilfunknetzes 4.

Seitens der Server- und Datenbankeinrichtung 7 des Mobilfunknetzes 4 erfolgt dann in dem mit E gekennzeichneten Verfahrensschritt eine Überprüfung hinsichtlich der Identität des Käufers 3 und eine Überprüfung hinsichtlich der Bonität des Käufers anhand der übermittelten Nahfeldkommunikationskennzeichnung des NFC-Tags 6. Dabei wird in einer Datenbank der Server- und Datenbankeinrichtung 7 des Mobilfunknetzes 4 anhand der übermittelten Nahfeldkommunikationskennzeichnung des NFC-Tags 6 die Mobilfunknetzrufnummer (MSISDN) des Käufers 3 bestimmt und überprüft, ob der Käufer 3 in dem entsprechenden System hinterlegt ist und ob er über die erforderlichen finanziellen Mittel für den Bezahlvorgang verfügt. Dabei kann das seitens oder mittels der Server- und Datenbankeinrichtung 7 des Mobilfunknetzes 4 verwaltete Konto für erfindungsgemäße Bezahlvorgänge ein sogenanntes Guthabenkonto sein, welches von dem Käufer 3 zuvor mit einem bestimmten Betrag aufgefüllt wurde und von welchem dann für erfindungsgemäße Bezahlvorgänge Beträge abgezogen bzw. abgebucht werden, oder aber ein Konto, welches dann bei erfindungsgemäßen Bezahlvorgängen mit Beträgen entsprechend dem Bezahlvorgang belastet werden.

Sofern die in dem mit E gekennzeichneten Verfahrensschritt erfolgende Überprüfung hinsichtlich der Identität des Käufers 3 und hinsichtlich der Bonität des Käufers 3 erfolgreich ist, übermittelt die Server- und Datenbankeinrichtung 7 des Mobilfunknetzes 4 in dem mit F gekennzeichneten Verfahrensschritt eine entsprechende Information an die Kasse 2 des Kassensystems des Kaufhauses 1 des Verkäufers. Seitens der Kasse 2 des Kassensystems des Kaufhauses 1 des Verkäufers wird der Käufer 3 dann aufgefordert, seine persönliche Identifikationsnummer (PIN) einzugeben, vorliegend vorzugsweise seitens einer Eingabeeinrichtung (Touchpad oder dergleichen) seitens der Kasse 2. Die persönliche Identifikationsnummer (PIN) ist dabei vorliegend seitens der Server- und Datenbankeinrichtung 7 des Mobilfunknetzes 4 dem der Nahfeldkommunikationskennzeichnung des NFC-Tags 6 des Käufers 3 und/oder der Mobilfunknetzrufnummer (MSISDN) des Mobilfunktelefons 5 des Käufers 3 zugeordnet. Die in Fig. 4 mit dem mit G gekennzeichneten Verfahrensschritt eingegebene persönliche Identifikationsnummer (PIN) wird dann von der Kasse 2 des Kassensystems automatisch an die Server- und Datenbankeinrichtung 7 des Mobilfunknetzes 4 übermittelt, vorliegend vorzugsweise über das Mobilfunknetz 4. Die Übermittlung der persönlichen Identifikationsnummer (PIN) von der Kasse 2 des Kassensystems des Kaufhauses 1 des Verkäufers an die Server- und Datenbankeinrichtung 7 des Mobilfunknetzes 4 ist in Fig. 4 durch den mit H gekennzeichneten Verfahrensschritt dargestellt.

Seitens der Server- und Datenbankeinrichtung 7 des Mobilfunknetzes 4 erfolgt dann in dem mit I gekennzeichneten Verfahrensschritt eine Überprüfung hinsichtlich der in Verfahrensschritt H übermittelten persönlichen Identifikationsnummer (PIN), welche dabei mit der seitens der Server- und Datenbankeinrichtung 7 des Mobilfunknetzes 4 hinterlegten persönlichen Identifikationsnummer (PIN) verglichen wird.

Sofern die in dem mit I gekennzeichneten Verfahrensschritt erfolgende Überprüfung der persönlichen Identifikationsnummer (PIN) erfolgreich war, das heißt die übermittelten persönlichen Identifikationsnummer (PIN) war bzw. ist identisch der zuvor hinterlegten persönlichen Identifikationsnummer (PIN), erfolgt der Bezahlvorgang bzw. wird der Bezahlvorgang von der Server- und Datenbankeinrichtung 7 des Mobilfunknetzes 4 initiiert.

Im Anschluss daran erhalten vorliegend das Kassensystem im Kaufhaus 1 des Verkäufers in dem mit J gekennzeichneten Verfahrensschritt als auch der Käufer 3 auf sein Mobilfunktelefon 5 in dem mit K gekennzeichneten Verfahrensschritt von der Server- und Datenbankeinrichtung 7 des Mobilfunknetzes 4 eine Information über die erfolgte Bezahlung, vorliegend vorteilhafterweise über das Mobilfunknetz 4 unter Nutzung eines Kommunikationsdienstes des Mobilfunknetzes 4, besonders bevorzugt mittels SMS.

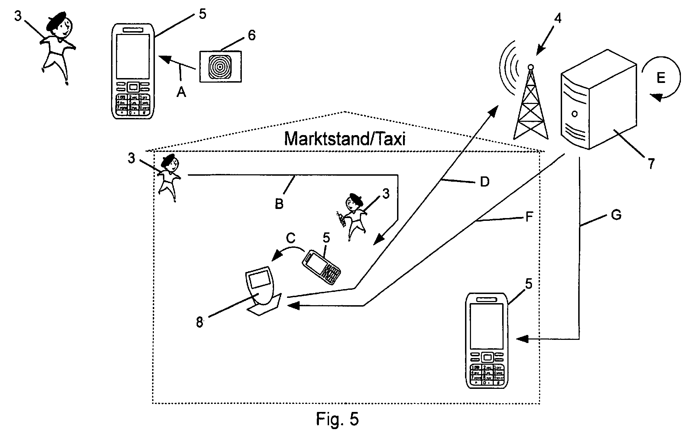

Bei dem in Fig. 5 dargestellten Ausführungsbeispiel bietet ein mobiler Verkäufer/Dienstleister auf einem Marktstand 1 oder in einem Taxi 1 Produkte und/oder Dienstleistungen an, welche seitens einer mobilen, nahfeldkommunikationsfähigen Einrichtung 8 zur Erfassung wenigstens einer Nahfeldkommunikationskennzeichnung eines NFC-Tags 6 von einem Käufer bzw. Kunden 3 zu bezahlen sind. Die mobilen, nahfeldkommunikationsfähigen Einrichtung 8 zur Erfassung wenigstens einer Nahfeldkommunikationskennzeichnung eines NFC-Tags 6 von einem Käufer bzw. Kunden 3 stellt damit quasi eine Kasse bereit. Der Käufer 3 nutzt vorliegend ein in einem Mobilfunknetz 4 gemäß einem GSM-, GPRS- und/oder UMTS- Funknetzstandard, vorliegend symbolisch dargestellt durch eine Sende- und/oder Empfangseinrichtung des Mobilfunknetzes 4, betreibbares mobiles Endgerät 5, vorliegend ein Mobilfunktelefon 5. Das Mobilfunktelefon 5 des Käufers 3 ist erfindungsgemäß mit einer eine Nahfeldkommunikationskennzeichnung aufweisenden nahfeldkommunikationsfähigen Einrichtung 6 versehen, vorliegend mit einem sogenannten NFC-Tag (NFC: Near Field Communication) 6. Seitens des Mobilfunknetzes 4 ist der dem Käufer 3 bzw. dessen mobilen Endgerät 5 vom Mobilfunknetz 4 zugewiesenen Rufnummer (MSISDN) im Rahmen eines Registrierungsverfahrens des NFC-Tags 6 die Nahfeldkommunikationskennzeichnung zugeordnet. Die Zuordnung von Käufer 3 bzw. mobilem Endgerät 5 zu der Nahfeldkommunikationskennzeichnung des NFC-Tags 6 erfolgt vorliegend seitens einer Server- und Datenbankeinrichtung 7 des Mobilfunknetzes 4. Die Server- und Datenbankeinrichtung 7 ist dabei mit einem Abrechnungssystem verbunden oder in diesem integriert, mit welchem insbesondere von dem Käufer 3 mit dem Mobilfunktelefon 5 genutzte Kommunikationsdienstleistungen des Mobilfunknetzes 4 gegenüber dem Käufer 3 abgerechnet werden. Erfindungsgemäß verwaltet die Server- und Datenbankeinrichtung 7 des Mobilfunknetzes 4 vorliegend quasi ein Konto, welches für erfindungsgemäße Bezahlvorgänge nutzbar ist. Die mobile nahfeldkommunikationsfähige Einrichtung 8 zur Erfassung wenigstens einer Nahfeldkommunikationskennzeichnung eines NFC-Tags 6 ist vorliegend eine die Basistechnologien eines mobilen Endgerätes, vorzugsweise eines Mobilfunktelefons nutzende Einrichtung 8, insbesondere gemäß einem GSM-, GPRS- und/oder UMTS-Funknetzstandard, welche eine erfindungsgemäße Nahfeldkommunikationskennzeichnung, auslesen kann und über das Mobilfunknetz 4 mit der Server- und Datenbankeinrichtung 7 und damit mit dem Abrechnungssystem verbindbar ist.

Bei dem in Fig. 5 dargestellten Ausführungsbeispiel, welches vorzugsweise für Bezahlvorgänge von mobilen Produkten und/oder Dienstleistungen wie sie Markthändler oder Taxifahrer erbringen Anwendung findet, hat der Käufer 3 in dem mit A gekennzeichneten Verfahrensschritt das NFC-Tag 6 an seinem Mobilfunktelefon 5 angebracht und sich bei der Server- und Datenbankeinrichtung 7 des Mobilfunknetzes 4 mit seiner Mobilfunknetzrufnummer (MSISDN) und der Nahfeldkommunikationskennzeichnung des NFC-Tags 6 für erfindungsgemäße Bezahlvorgänge registriert. Ein entsprechend für erfindungsgemäße Bezahlvorgänge nutzbares Konto wird dann vorliegend seitens der Server- und Datenbankeinrichtung 7 des Mobilfunknetzes 4 genutzt und verwaltet. Das Konto seitens der Server- und Datenbankeinrichtung 7 des Mobilfunknetzes 4 erfolgt dann vorzugsweise in Zusammenhang mit der Abrechnung von dem Käufer 3 mit dem Mobilfunktelefon 5 genutzter Kommunikationsdienstleistungen des Mobilfunknetzes 4.

In dem mit B gekennzeichneten Verfahrensschritt wählt der Käufer 3 in auf dem Marktstand 1 des Verkäufers angebotene Produkte und/oder Dienstleistungen aus oder nutzt ein Taxi 1. Zur Bezahlung der Produkte und/oder Dienstleistungen des Marktändlers oder Taxifahrers hält der Käufer 3 in dem mit C gekennzeichneten Verfahrensschritt sein mit dem NFC-Tag 6 versehenes Mobilfunktelefon 5 zur Erfassung der Nahfeldkommunikationskennzeichnung des NFC-Tags 6 an die mobile, nahfeldkommunikationsfähige Einrichtung 8 oder in den Nahfeldbereich der mobilen, nahfeldkommunikationsfähigen Einrichtung 8.

In dem mit D gekennzeichneten Verfahrensschritt übermittelt die mobile, nahfeldkommunikationsfähige Einrichtung 8 des Marktändlers oder Taxifahrers die erfasste Nahfeldkommunikationskennzeichnung des NFC-Tags 6 des Mobilfunktelefons 5 des Käufers 3 an die Server- und Datenbankeinrichtung 7, vorliegend vorteilhafterweise über das Mobilfunknetz 4 unter Nutzung eines Kommunikationsdienstes des Mobilfunknetzes 4.

Seitens der Server- und Datenbankeinrichtung 7 des Mobilfunknetzes 4 erfolgt dann in dem mit E gekennzeichneten Verfahrensschritt eine Überprüfung hinsichtlich der Identität des Käufers 3 und eine Überprüfung hinsichtlich der Bonität des Käufers, vorzugsweise mittels diverser Prüfungskriterien und/oder - medien, wie beispielsweise Sperrlisten und/oder dergleichen, anhand der übermittelten Nahfeldkommunikationskennzeichnung des NFC-Tags 6. Dabei wird in einer Datenbank der Server- und Datenbankeinrichtung 7 des Mobilfunknetzes 4 anhand der übermittelten Nahfeldkommunikationskennzeichnung des NFC-Tags 6 die Mobilfunknetzrufnummer (MSISDN) des Käufers 3 bestimmt und überprüft, ob der Käufer 3 in dem entsprechenden System hinterlegt ist und ob er über die erforderlichen finanziellen Mittel für den Bezahlvorgang verfügt. Dabei kann das seitens oder mittels der Server- und Datenbankeinrichtung 7 des Mobilfunknetzes 4 verwaltete Konto für erfindungsgemäße Bezahlvorgänge ein sogenanntes Guthabenkonto sein, welches von dem Käufer 3 zuvor mit einem bestimmten Betrag aufgefüllt wurde und von welchem dann für erfindungsgemäße Bezahlvorgänge Beträge abgezogen bzw. abgebucht werden, oder aber ein Konto, welches dann bei erfindungsgemäßen Bezahlvorgängen mit Beträgen entsprechend dem Bezahlvorgang belastet wird.

Sofern die in dem mit E gekennzeichneten Verfahrensschritt erfolgende Überprüfung hinsichtlich der Identität des Käufers 3 und hinsichtlich der Bonität des Käufers 3 erfolgreich ist, erfolgt der Bezahlvorgang bzw. wird der Bezahlvorgang von der Server- und Datenbankeinrichtung 7 des Mobilfunknetzes 4 initiiert.

Im Anschluss daran erhalten vorliegend die mobile, nahfeldkommunikationsfähige Einrichtung 8 des Markthändlers bzw. des Taxifahrers in dem mit F gekennzeichneten Verfahrensschritt als auch der Käufer 3 auf sein Mobilfunktelefon 5 in dem mit G gekennzeichneten Verfahrensschritt von der Server- und Datenbankeinrichtung 7 des Mobilfunknetzes 4 eine Information über die erfolgte Bezahlung, vorliegend vorteilhafterweise über das Mobilfunknetz 4 unter Nutzung eines Kommunikationsdienstes des Mobilfunknetzes 4, besonders bevorzugt mittels SMS, MMS, Instant Messaging oder USSD.

Die in den Figuren der Zeichnung dargestellten und im Zusammenhang mit diesen beschriebenen Ausführungsbeispiele der Erfindung dienen lediglich der Erläuterung der Erfindung und sind für diese nicht beschränkend.

### Bezugszeichenliste:

- 1: Kaufhaus/Marktstand/Taxi
- 2: Kasse/Kassensystem
- 3: Käufer/Kunde
- 4: Mobilfunknetz
- 5: mobiles Endgerät/Mobilfunktelefon (Käufer/Kunde (3))
- 6: nahfeldkommunikationsfähige Einrichtung/NFC-Tag
- 7: Server- und Datenbankeinrichtung (Mobilfunknetz (4))
- 8: nahfeldkommunikationsfähige Einrichtung zur Erfassung wenigstens einer Nahfeldkommunikationskennzeichnung/NFC -Lesegerät

- A: Verfahrensschritt
- B: Verfahrensschritt
- C: Verfahrensschritt
- D: Verfahrensschritt
- E: Verfahrensschritt
- F: Verfahrensschritt
- G: Verfahrensschritt
- H: Verfahrensschritt
- I: Verfahrensschritt
- J: Verfahrensschritt
- K: Verfahrensschritt

## Patentansprüche

1. Verfahren zur bargeldlosen Bezahlung eines Einkaufs eines Käufers (3) bei einem Verkäufer von Produkten und/oder Dienstleistungen, wobei der Käufer (3) zur Bezahlung ein in einem Mobilfunknetz (4) betreibbares mobiles Endgerät (5) nutzt und der Bezahlvorgang über das Mobilfunknetz (4) erfolgt,
wobei
das mobile Endgerät (5) des Käufers (3) eine nahfeldkommunikationsfähige Einrichtung (6) mit wenigstens einer Nahfeldkommunikationskennzeichnung aufweist,
seitens des Verkäufers in Verbindung mit einer Verkaufseinrichtung und/oder Kasseneinrichtung (2) wenigstens eine nahfeldkommunikationsfähige Einrichtung (8) zur Erfassung wenigstens einer Nahfeldkommunikationskennzeichnung vorgesehen ist,
und
im Rahmen eines Bezahlvorgangs
die wenigstens eine Nahfeldkommunikationskennzeichnung der nahfeldkommunikationsfähigen Einrichtung (6) des mobilen Endgerätes (5) des Käufers (3) von der wenigstens einen nahfeldkommunikationsfähigen Einrichtung (8) zur Erfassung wenigstens einer Nahfeldkommunikationskennzeichnung erfasst wird,
**dadurch gekennzeichnet, dass**
die wenigstens eine Nahfeldkommunikationskennzeichnung der nahfeldkommunikationsfähigen Einrichtung (6) des mobilen Endgerätes (5) des Käufers (3) seitens des Mobilfunknetzes (4) eindeutig dem Käufer (3) und/oder dem mobilen Endgerät (5) des Käufers (3) zugeordnet ist, wobei die Zuordnung zumindest über die dem Käufer (3) beziehungsweise dessen mobilen Endgerät (5) vom Mobilfunknetz (4) zugewiesenen Mobilfunknetzrufnummer (MSISDN) erfolgt,
die erfasste Nahfeldkommunikationskennzeichnung der nahfeldkommunikationsfähigen Einrichtung (6) des mobilen Endgerätes (5, 6) des Käufers (3) von einer Einrichtung des Verkäufers an das Mobilfunknetz (4) übermittelt wird,
seitens des Mobilfunknetzes (4) unter Nutzung der Nahfeldkommunikationskennzeichnung eine Überprüfung hinsichtlich der Identität des Käufers (3) und eine Überprüfung hinsichtlich der Bonität des Käufers (3) erfolgt oder initiiert wird,
der Aufenthaltsort des mobilen Endgerätes (5) im Mobilfunknetz (4) mittels sogenannter LBS-Diensten bzw. LBS-Einrichtungen und/oder mittels sogenannter GPS-Diensten bzw. GPS-Einrichtungen ermittelt wird,
der ermittelte Aufenthaltsort des mobilen Endgerätes (5) im Mobilfunknetz (4) mit dem der Verkaufseinrichtung und/oder der Kasseneinrichtung (2) des Verkäufers seitens des Mobilfunknetzes (4) zugeordneten Aufenthaltsort verglichen wird, und bei erfolgreicher Überprüfung der Identität und der Bonität des Käufers (3) sowie bei Identität der Aufenthaltsorte die Bezahlung über das Mobilfunknetz (4) abgewickelt wird.

2. Verfahren nach Anspruch 1, **dadurch gekennzeichnet, dass** der wenigstens einen Nahfeldkommunikationskennzeichnung des mobilen Endgerätes (5) des Käufers (3) seitens des Mobilfunknetzes (4) wenigstens eine persönliche Identifikationsnummer (PIN) des Käufers (3) zugeordnet ist oder wird, bei erfolgreicher Überprüfung der Identität und der Bonität des Käufers zunächst eine Überprüfung der wenigstens einen persönlichen Identifikationsnummer (PIN) des Käufers (3) erfolgt, bevor bei erfolgreicher Überprüfung der wenigstens einen persönlichen Identifikationsnummer (PIN) des Käufers (3) die Bezahlung über das Mobilfunknetz (4) abgewickelt wird.

3. Verfahren nach Anspruch 2, **dadurch gekennzeichnet, dass** im Rahmen der Überprüfung der wenigstens einen persönlichen Identifikationsnummer (PIN) des Käufers (3) der Käufer (3) die wenigstens eine persönliche Identifikationsnummer (PIN) seitens seines mobilen Endgerätes (5) oder seitens einer seitens des Verkäufers vorgesehenen Einrichtung zur Erfassung wenigstens einer persönlichen Identifikationsnummer (PIN) wenigstens eines Käufers (3) eingibt, die durch Eingabe erfasste wenigstens eine persönliche Identifikationsnummer (PIN) des Käufers (3) an das Mobilfunknetz (4) übermittelt wird und seitens des Mobilfunknetzes (4) die wenigstens eine übermittelte persönliche Identifikationsnummer (PIN) des Käufers (3) mit der wenigstens einen der wenigstens einen Nahfeldkommunikationskennzeichnung des mobilen Endgerätes (5) des Käufers (3) seitens des Mobilfunknetzes (4) zugeordneten persönlichen Identifikationsnummer (PIN) des Käufers (3) verglichen wird.

4. Verfahren nach Anspruch 3, **dadurch gekennzeichnet, dass** die Eingabe und die Übermittlung der wenigstens einen persönlichen Identifikationsnummer (PIN) des Käufers (3) unter Nutzung einer seitens des mobilen Endgerätes (5) des Käufers (3) ausgeführten Anwendung erfolgen.

5. Verfahren nach Anspruch 4, **dadurch gekennzeichnet, dass** die Ausführung der Anwendung im Rahmen der Überprüfung der wenigstens einen persönlichen Identifikationsnummer (PIN) des Käufers (3) automatisch von dem Mobilfunknetz (4) ausgelöst wird.

6. Verfahren nach Anspruch 4, **dadurch gekennzeichnet, dass** die Ausführung der Anwendung von dem Käufer (3) ausgelöst wird.

7. Verfahren nach einem der Ansprüche 1 bis 6, **dadurch gekennzeichnet, dass** die über das Mobilfunknetz (4) erfolgende Bezahlungsabwicklung seitens einer Einrichtung des Verkäufers und/oder seitens des mobilen Endgerätes (5) des Käufers (3) signalisiert wird, vorzugsweise unter Nutzung eines Kommunikationsdienstes des Mobilfunknetzes (4).

8. Verfahren nach einem der Ansprüche 1 bis 7, **dadurch gekennzeichnet, dass** die nahfeldkommunikationsfähige Einrichtung (6) mit wenigstens einer Nahfeldkommunikationskennzeichnung einen NFC-Tag umfasst.

9. Mobiles Endgerät (5) zum Betrieb in einem Mobilfunknetz, vorzugsweise gemäß einem GSM-, GPRS- und/oder UMTS-Funknetzstandard, **dadurch gekennzeichnet, dass** dieses wenigstens eine nahfeldkommunikationsfähige Einrichtung (6) mit wenigstens einer Nahfeldkommunikationskennzeichnung aufweist und ausgebildet und/oder eingerichtet ist, ein Verfahren nach einem der Ansprüche 1 bis 8 auszuführen.

10. Einrichtung seitens eines Verkäufers von Produkten und/oder Dienstleistungen, **dadurch gekennzeichnet, dass** diese zur Erfassung wenigstens einer Nahfeldkommunikationskennzeichnung, zur Übermittlung wenigstens einer Nahfeldkommunikationskennzeichnung an ein Mobilfunknetz (4), zur Erfassung wenigstens einer persönlichen Identifikationsnummer (PIN) eines Käufers (3) und/oder zur Signalisierung wenigstens einer über das Mobilfunknetz (4) erfolgenden Bezahlungsabwicklung zur Umsetzung und/oder Ausführung eines Verfahrens nach einem der Ansprüche 1 bis 8 ausgebildet und/oder eingerichtet ist.

11. Mobilfunknetz (4), vorzugsweise gemäß einem GSM-, GPRS- und/oder UMTS-Funknetzstandard, **dadurch gekennzeichnet, dass** dieses wenigstens eine Einrichtung aufweist welche ausgebildet und/oder eingerichtet ist, ein Verfahren nach einem der Ansprüche 1 bis 8 auszuführen und/oder zu koordinieren, mit einem mobilen Endgerät (5) nach Anspruch 9 und/oder einer Einrichtung seitens eines Verkäufers von Produkten und/oder Dienstleistungen nach Anspruch 10.

## Claims

1. A method for the cash-less payment of a purchase by a buyer (3) from a seller of products and/or services, wherein the buyer (3) uses a mobile terminal (5) operable in a mobile radio network (4) for the payment and the payment is carried out via the mobile radio network (4),
wherein
the mobile terminal (5) of the buyer (3) comprises a device (6) which is capable of a near field communication and comprises a near field communication identification,
the seller is provided, in connection with a retail facility and/or cash device, with at least one device (8) which is capable of a near field communication for recording at least one near field communication identification,
and
within the scope of a payment process,
the at least one near field communication identification of the device (6) capable of a near field communication of the mobile terminal (5) of the buyer (3) will be recorded by the at least one device (8) capable of a near field communication for recording at least one near field communication identification,
**characterized in that**
the at least one near field communication identification of the device (6) capable of a near field communication of the mobile terminal (5) of the buyer (3) is unequivocally allocated to the buyer (3) and/or to the mobile terminal (5) of the buyer (3) by the mobile radio network (4), wherein the allocation is at least realized via the mobile radio network call number (MSISDN) assigned to the buyer (3) respectively to his mobile terminal (5) by the mobile radio network (4),
the recorded near field communication identification of the device (6) capable of a near field communication of the mobile terminal (5, 6) of the buyer (3) is transmitted by a device of the seller to the mobile radio network (4),
the mobile radio network (4) carries out or initiates a check with respect to the identity of the buyer (3) and with respect to the creditworthiness of the buyer (3) using the near field communication identification,
the local position of the mobile terminal (5) in the mobile radio network (4) is determined by means of so called LBS services or LBS devices and/or by means of so called GPS services or GPS devlces,
the determined local position of the mobile terminal (5) in the mobile radio network (4) is compared to the local position allocated to the retail facility and/or the cash device (2) of the seller by the mobile radio network (4), and if a check of the identity and the creditworthiness of the buyer (3) has been successfully carried out as well as in case of an identity of the local positions, the payment will be made via the mobile radio network (4).

2. A method according to claim 1, **characterized in that** at least one personal identification number (PIN) of the buyer (3) is or will be allocated to the at least one near field communication identification of the mobile terminal (5) of the buyer (3) by the mobile radio network (4), and in case of a successful check of the identity and the creditworthiness of the buyer, the at least one personal identification number (PIN) of the buyer (3) will be checked, before the payment will be made via the mobile radio network (4), if the check of the at least one personal identification number (PIN) of the buyer (3) is successful.

3. A method according to claim 2, **characterized in that** within the scope of the check of the at least one personal identification number (PIN) of the buyer (3), the buyer (3) will enter the at least one personal identification number (PIN) by means of his mobile terminal (5) or by means of a device provided by the seller for recording at least one personal identification number (PIN) of at least one buyer (3), the at least one personal identification number (PIN) of the buyer (3) which has been recorded thanks to the input will be transmitted to the mobile radio network (4) and the mobile radio network (4) will compare the at least one transmitted personal identification number (PIN) of the buyer (3) with the at least one personal identification number (PIN) of the buyer (3) which has been allocated by the mobile radio network (4) to the at least one near field communication identification of the mobile terminal (5) of the buyer (3).

4. A method according to claim 3, **characterized in that** the at least one personal identification number (PIN) of the buyer (3) will be entered and transmitted using an application which is carried out by the mobile terminal (5) of the buyer (3).

5. A method according to claim 4, **characterized in that** the execution of the application will be automatically initiated by the mobile radio network (4) within the scope of checking the at least one personal identification number (PIN) of the buyer (3).

6. A method according to claim 4, **characterized in that** the execution of the application will be initiated by the buyer (3).

7. A method according to one of the claims 1 to 6, **characterized in that** the payment transaction made via the mobile radio network (4) will be signalized by a device of the seller and/or by the mobile terminal (5) of the buyer (3), preferably using a communication service of the mobile radio network (4).

8. A method according to one of the claims 1 to 7, **characterized in that** the device (6) capable of a near field communication and comprising at least one near field communication identification includes an NFC tag.

9. A mobile terminal (5) for being operated in a mobile radio network, preferably according to a GSM, GPRS and/or UMTS radio network standard, **characterized in that** this one at least comprises one device (6) capable of a near field communication and comprising at least one near field communication identification and is designed and/or adapted to carry out a method according to one of the claims 1 to 8.

10. A device of a seller of products and/or services, **characterized in that** this one is designed and/or adapted to carry out and/or execute the method according to one of the claims 1 to 8 for recording at least one near field communication identification, transmitting at least one near field communication identification to a mobile radio network (4), recording at least one personal identification number (PIN) of a buyer (3) and/or signalizing at least one payment transaction being made via the mobile radio network (4).

11. A mobile radio network (4), preferably according to a GSM, GPRS and/or UMTS radio network standard, **characterized in that** this one at least comprises one device which is designed and/or adapted to carry out and/or to coordinate a method according to one of the claims 1 to 8, comprising a mobile terminal (5) according to claim 9 and/or a device of the seller of products and/or services according to claim 10.

## Revendications

1. Procédé de paiement sans espèces d'un achat d'un acheteur (3) chez un vendeur de produits et/ou de services, l'acheteur (3) utilisant un terminal mobile (5) actionnable dans un réseau radio mobile (4) pour le paiement et la procédure de paiement se faisant via le réseau radio mobile (4),
dans lequel
le terminal mobile (5) de l'acheteur comprend un dispositif (6) capable d'une communication en champ proche comprenant au moins une identification de communication en champ proche,
le vendeur, en association avec un dispositif de vente et/ou un dispositif de caisse (2), est muni d'au moins un dispositif (8) capable d'une communication en champ proche et destiné à enregistrer au moins une identification de communication en champ proche,
et
l'au moins une identification de communication en champ proche du dispositif (6) capable d'une communication en champ proche du terminal mobile (5) de l'acheteur (3) est enregistré dans le cadre d'une procédure de paiement par l'au moins un dispositif (8) capable d'une communication en champ proche et destiné à enregistrer au moins une identification de communication en champ proche,
**caractérisé en ce que**
l'au moins une identification de communication en champ proche du dispositif (6) capable d'une communication en champ proche du terminal mobile (5) de l'acheteur (3) est attribuée de façon univoque à l'acheteur (3) et/ou au terminal mobile (5) de l'acheteur (3) par le réseau radio mobile (4), l'attribution se faisant au moins par moyen du numéro d'appel dans le réseau radio mobile (MSISDN) assigné à l'acheteur (3) ou au terminal mobile (5) de celui-ci par le réseau radio mobile (4),
l'identification de communication en champ proche enregistrée du dispositif (6) capable d'une communication en champ proche du terminal mobile (5) de l'acheteur (3) est transmise d'un dispositif du vendeur au réseau radio mobile (4),
le réseau radio mobile (4) effectue ou initie une vérification par rapport à l'identité de l'acheteur (3) et une vérification par rapport à la solvabilité de l'acheteur (3) en utilisant l'identification de communication en champ proche, la position locale du terminal mobile (5) dans le réseau radio mobile (4) est déterminée par moyen de services dits LBS ou de dispositifs dits LBS et/ou par moyen de services dits GPS ou de dispositifs dits GPS,
la position locale déterminée du terminal mobile (5) dans le réseau radio mobile (4) est comparée à la position locale attribuée au dispositif de vente et/ou au dispositif de caisse (2) du vendeur par le réseau radio mobile (4), et après une vérification réussie de l'identité et de la solvabilité de l'acheteur (3) ainsi que dans le cas des positions locales identiques, le paiement s'effectue via le réseau radio mobile (4).

2. Procédé selon la revendication 1, **caractérisé en ce qu'**au moins un numéro d'identification personnelle (PIN) de l'acheteur (3) est ou sera attribué à l'au moins une identification de communication en champ proche du terminal mobile (5) de l'acheteur (3) par le réseau radio mobile (4), et dans le cas d'une vérification réussie de l'identité et de la solvabilité de l'acheteur, une vérification de l'au moins un numéro d'identification personnelle (PIN) de l'acheteur (3) est d'abord effectuée avant que le paiement soit fait via le réseau radio mobile (4) dans le cas d'une vérification réussie de l'au moins un numéro d'identification personnelle (PIN) de l'acheteur (3).

3. Procédé selon la revendication 2, **caractérisé en ce que** dans le cadre d'une vérification de l'au moins numéro d'identification personnelle (PIN) de l'acheteur (3), l'acheteur (3) entre l'au moins un numéro d'identification personnelle (PIN) par moyen de son terminal mobile (5) ou par moyen d'un dispositif prévu par le vendeur et destiné à enregistrer au moins un numéro d'identification personnelle (PIN) d'au moins un acheteur (3), l'au moins un numéro d'identification personnelle (PIN) de l'acheteur (3) enregistré par l'entrée est transmis au réseau radio mobile (4) et le réseau radio mobile (4) compare l'au moins un numéro d'identification personnelle (PIN) transmis de l'acheteur (3) avec l'au moins un numéro d'identification personnelle (PIN) de l'acheteur (3) qui a été attribué par le réseau radio mobile (4) à l'au moins une identification de communication en champ proche du terminal mobile (5) de l'acheteur (3).

4. Procédé selon la revendication 3, **caractérisé en ce que** l'au moins un numéro d'identification personnelle (PIN) de l'acheteur (3) est entré et transmis en utilisant une application exécutée par le terminal mobile (5) de l'acheteur (3).

5. Procédé selon la revendication 4, **caractérisé en ce que** l'exécution de l'application est automatiquement initiée par le réseau radio mobile (4) dans le cadre de la vérification de l'au moins un numéro d'identification personnelle (PIN) de l'acheteur (3).

6. Procédé selon la revendication 4, **caractérisé en ce que** l'exécution de l'application est initiée par l'acheteur (3).

7. Procédé selon l'une des revendications 1 à 6, **caractérisé en ce que** le traitement de paiement se faisant via le réseau radio mobile (4) est signalisé par un dispositif du vendeur et/ou par le terminal mobile (5) de l'acheteur (3), de préférence en utilisant un service de communication du réseau radio mobile (4).

8. Procédé selon l'une des revendications 1 à 7, **caractérisé en ce que** le dispositif (6) capable d'une communication en champ proche et comprenant au moins une identification de communication en champ proche comprend un tag NFC.

9. Terminal mobile (5) destiné au fonctionnement dans un réseau radio mobile, de préférence selon un standard de réseau radio mobile GSM, GPRS et/ou UMTS, **caractérisé en ce que** celui-ci comprend au moins un dispositif (6) capable d'une communication en champ proche et comprenant au moins une identification de communication en champ proche et que celui-ci est configuré pour et/ou adapté à exécuter un procédé selon l'une de revendications 1 à 8.

10. Dispositif d'un vendeur de produits et/ou de services, **caractérisé en ce que** celui-ci est configuré pour et/ou adapté à mettre en oeuvre et/ou exécuter le procédé selon l'une des revendications 1 à 8 pour enregistrer au moins une identification de communication en champ proche, pour transmettre au moins une identification de communication en champ proche à un réseau radio mobile (4), pour enregistrer au moins un numéro d'identification personnelle (PIN) d'un acheteur (3) et/ou pour signaliser au moins un traitement de paiement se faisant via le réseau radio mobile (4).

11. Réseau radio mobile (4), de préférence selon un standard de réseau radio mobile GSM, GPRS et/ou UMTS, **caractérisé en ce que** celui-ci comprend au moins un dispositif qui est configuré pour et(ou adapté à exécuter et/ou coordonner un procédé selon l'une des revendications 1 à 8, comprenant un terminal mobile (5) selon la revendication 9 et/ou un dispositif d'un vendeur de produits et/ou de services selon la revendication 10.
